# EUROPEAN PATENT SPECIFICATION

(11) **EP 3 059 825 B1**
(45) Date of publication and mention of the grant of the patent: **14.02.2018**
(21) Application number: 16156073.5
(22) Date of filing: 17.02.2016
(51) Int. Cl.: H02G 3/12, H02G 3/14

(54) **FRAME FOR FLUSH BOXES AND KIT FOR FLUSH SUPPORTS FOR MOUNTING COMPONENTS OF ELECTRIC OR HOME AUTOMATION INSTALLATIONS**
RAHMEN FÜR UNTERPUTZDOSEN UND KIT FÜR EINE SOLCHE HALTERUNG FÜR ELEKTRISCHE ODER AUTOMATISIERTE HAUSKOMPONENTEN
CADRE ET KIT POUR LE MONTAGE DE BOITES ELECTRIQUES OU AUTOMATISES A DOMICILE

(30) Priority: 18.02.2015 IT GE20150025
(43) Date of publication of application: 24.08.2016
(73) Proprietor: Pucci Saoro, S.R.L., 50050 Capraia e Limite (FI) (IT)
(72) Inventor: Pucci, Andrea, 50050 Limite Sull'Arno (FI) (IT); Pucci, Luca, 50050 Limite Sull'Arno (FI) (IT)
(74) Representative: Karaghiosoff, Giorgio Alessandro

(56) References cited:
- EP-A1- 1 189 323
- EP-A1- 2 801 680
- DE-B- 1 079 715

## Description

The present invention relates to a frame for flush boxes for mounting components of electric or home automation installations, according to the preamble of claim 1, as is for example disclosed by DE 10 79 715 B. Figure 1 shows a typical flush box currently available on the market and used for arranging housings, within the thickness of the wall, for mounting control components or other elements of electric or home automation installations.

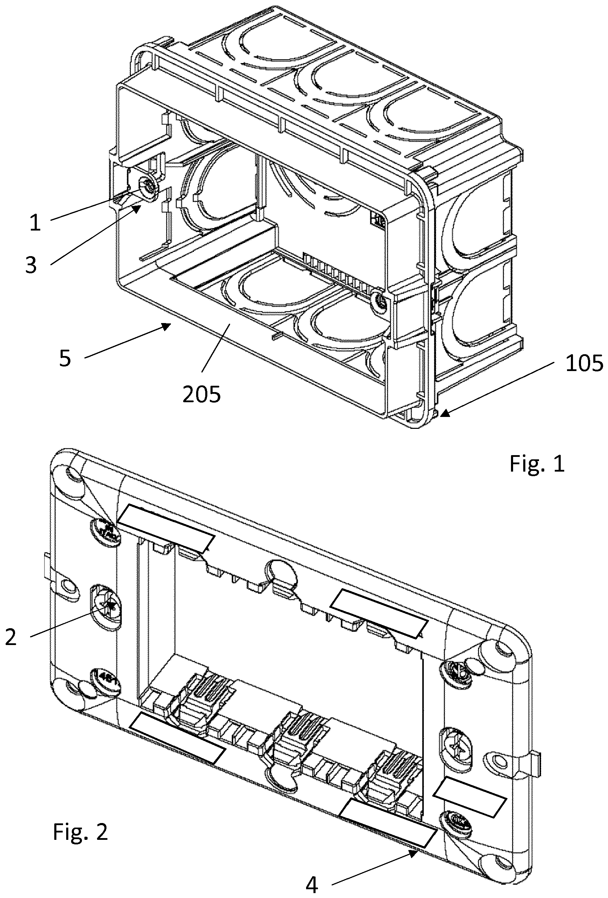

Figure 2 shows a plate supporting said components. Such plate is intended to close the open side of the box 5 and to support the components in the proper position and in a movable manner. The supporting plate 4 is secured after applying the finishing layer of the wall and it is intended to be secured by means of screws 2 into threaded seats 1 provided in respective fastening tongues 3 associated to the shorter sides of the box 5. The supporting plate 4 typically has snap coupling means for one or more components that in turn are housed into a dedicated case with standard size and with complementary means coupling with means provided on the supporting plate.

Boxes 5 as the one of figure 1 have an outer peripheral tab extending for all the length of the shell walls at a given predetermined distance from the delimiting edge of the open front side of the box. Such tab 105 forms an abutment recessed by a predetermined extent with respect to the edge delimiting the open front side such extent substantially corresponding to the thickness of the finishing layer of the masonry.

As it clearly results from the figure, the tab 105 has a relatively small projection compared to the tolerances generated upon breaking the masonry for creating the recess for securing the box.

Generally this results in a wrong positioning of the box that then compromises the proper position of the edge of the aperture with respect to the finished surface of the wall where it is fitted.

Moreover the fastening tongues 3 for the supporting plate 4 have such a position with respect to said edge that the plate, in the mounted condition, protrudes beyond the surface of the wall finishing layer.

Once the components are mounted in the supporting plate, in known systems, a cover plate is applied on the supporting plate, in the form of a frame having apertures coinciding with the front sides of the components and surfaces completely overlapping the supporting plate and by a given predetermined extent also the wall surrounding said supporting plate.

Except for dimensional changes or also changes about the snap fastening means for the operating components or about aesthetical arrangements, all the known systems currently have a construction like what described above.

Also the most advanced mounting systems such as the one by the company AVE defined as "wall-lined installation" exhibit, once mounted, a cover plate protruding past the surface of the wall.

Leaving a merely aesthetical aspect out of consideration that is completely different with respect to a mounting system having a cover plate with the front surface thereof and therefore of the receptacles aligned with the finishing surface of the wall, there is also an advantageous technical effect in providing the plate completely flush with the wall. In a configuration of such type, the cover plate does not form any step with the wall and therefore there is no surface for the dust to set on. Especially when the color of the wall and of the cover plate is clear, the dust on the protruding edge thereof is very evident also because such units on the wall are typically placed at height. Moreover the risk for cleaning personnel to stain the wall if for example unintentionally using a not perfectly clean cloth is very high and over time the risk of compromising the aesthetical effect with dark stains or dark shadows is very high.

As regards safety, the recessed arrangement flush with the wall finishing surface prevents not skilled personnel, also children, from acting manually and without tools to remove the cover plate. Such operation even if with difficulty has a given possibility of success, and when the cover plate is removed the access to the supporting plate and to the components fitted therein is direct, resulting in a danger for safety.

A further technical drawback of known flush boxes is the fact that they are not suitable for all the types of wall and therefore depending on the type of wall it is necessary to have available the proper flush box. This results in clear inconveniences and also the need of keeping in stock a great number of different types of flush boxes resulting in logistics troubles and in products being fixed in warehouses.

As it is clear, considering that the operation for arranging the wall in order to receive the flush box is a quite rough operation, also the recess obtained in the wall for housing the flush box generally has considerable dimension tolerances and a shape usually completely irregular.

Moreover when mounting the flush box, the walls thereof have to be partially opened for fitting the end portions of the sheaths for the electric wires embedded in the wall. Such sheaths that are relatively elastically flexible prevent the box from being accurately handled upon fastening it in the recess in the wall and they further make it difficult to properly position the box relative to the wall.

Due to the above the fine positioning of the box upon its fastening into the corresponding recess formed in the wall is absolutely impossible or anyway it does not led to constant results, on average. Therefore due to the current shapes of the flush boxes it is not possible to presume to properly position them relative to the rough wall and in such a manner to presume the cover plate to have a final position flush with the surface of the wall finishing layer.

Anyway even if considering an absolutely improbable hypothesis like this one, since the current cover plates have an extension greater than that of the open side of the box, the possible very improbable recessed housing of the cover plate, with respect to the wall finished surface, would not have clean and clear edges since no walls containing the masonry finishing material would be provided on the side towards the peripheral edge of the cover plate.

Document DE1079715 discloses a frame according to the preamble of claim 1.

Similarly also document EP2801680 discloses a frame according to the preamble of claim 1 but the frame disclosed is not directed for supporting components for operating an electric circuit.

Document EP1189323 discloses a cable conduit for electric circuits the front face of the apparatus being flush to the surface of the conduit.

The invention aims at improving the current systems by a frame for flush boxes for mounting components of electric or home automation installations, or the like, said frame being provided as the end part of a flush support, such as a box or the like, of the type intended to be embedded into the thickness of a wall and said frame being provided all about the edge of the open front side of said flush support or composing said peripheral edge of said open side, such to overcome the drawbacks of the current systems described above and such to make it possible to mount the cover plates and the operating components perfectly flush with the finished surface of the wall.

Said technical effect is obtained by a frame according to the combination of features of the preamble and of the charactersing part of claim 1.

According to an improvement said first tab has an extension at least equal to that of said second tab of the cross-section of the frame.

By such arrangement, the frame contemporaneously forms a large abutment surface against the rough wall that guarantees the flush box to be perfectly positioned with respect thereto and with reference to the finishing layer as well as a peripheral edge of a recess housing the supporting plate with the possible cover plate, if any, that contemporaneously efficaciously supports the end part of the finishing layer filling the region delimited by the L-shaped section.

Moreover such arrangement overcomes the drawbacks of known flush boxes that are specifically suitable for only one type of wall, therefore the boxes suitable for masonry walls cannot be used in dry walls and vice versa. The invention overturns such situation since dye to the frame the system is made as universal and therefore the need of keeping great amounts of products in stock is reduced and the activity of the installers is facilitated since they do not need to have different materials in order to face any needs.

The advantages as regards safety are clear above all as regards the likelihood of accidents with children trying to remove the cover plates for curiosity and to access the parts protected by them. Besides the technical advantages the mounting system according to the invention has a considerable aesthetical importance since the standard conventional product gains a new more modern, current identity as if it were a new object, another item with respect to conventional mounting systems. In one preferred embodiment said spacer elements are firmly provided on the frame.

In one improvement, the frame has, along its inner edge, a continuous or discontinuous border for the abutment of the supporting plate or a combination of at least one supporting plate with at least one cover plate, at least in some of them at least three preferably four adjustable spacer elements are fitted which are arranged in such positions to uniquely define an abutment plane.

Preferably the adjustable spacer elements in positions coinciding with three points are arranged at the vertices of a triangle or the four adjustable spacer elements are arranged at the vertices of a rectangle and therefore, in such case, coinciding with the corner areas of the supporting plate.

As an alternative to adjustable spacer elements firmly provided on the frame it is possible to provide as an alternative also spacer elements such as shimming elements that are elements separated from the frame and are installable upon fastening the supporting plate.

Such shimming elements can be provided in a kit with the frame.

Several embodiments are possible for said frame allowing different manners for adapting it to already existing contingent situations.

As regards a system of new concept and not installed yet it is possible to provide one embodiment where the frame is made as one piece with a conventional box body.

In one embodiment the box part is like the one of figure 1 and where the frame replaces the region of the tab 105 and the end strip 205 of the shell walls between said tab 105 and the peripheral edge of the open side of the box.

In this case the frame can be made as one piece with the conventional box part.

As regards the adjustable spacer means they can be firmly mounted on the frame and can be composed of bolts or screws cooperating with threaded or engaging seats made as one piece in the material of the frame or with nut screws embedded and incorporated in the material of the frame.

As an alternative it is possible to provide spacer elements in the form of shimming elements that can be applied in the desired positions to bring the frame and/or the supporting plate in the proper alignment position with respect to the finished surface of the wall.

Such variant of the spacer elements can be provided in combination with any of the possible embodiments of the frame described herein or that can be derived therefrom.

However since it is possible for an installation to be already partially installed, namely whose conventional boxes have been already set into the wall, in this case the frame is provided as a part independent and applicable later to box set in the wall.

It is possible to provide different alternative means.

A preferred embodiment provides the frame, on the rear side, to have a seat for fitting the wall strip of the conventional box surrounding the open side of the box and which fitting seat has an abutment flange with which the end edge of the shell walls of the box cooperates and that delimits the open side thereof and possibly a continuous or discontinuous delimiting side wall of a fitting seat intended to overlap said end strip of the shell surface of the box in the region of the open side thereof.

It is possible to provide simple snap means, such as elastic teeth mounted on elastic tongues in one of the two parts of the frame or box and that are intended to snap fit seats or recesses of the other one of said two parts of frame or box.

Still according to a further variant, said seat fitting the end strip of the shell wall of the box along the edge of the open side thereof can have perforated tabs coinciding with the tongues fastening the box to the supporting plate, said perforated tabs being fastenable in turn by means of screw means to said tongues of the box.

This embodiment is particularly advantageous, since it overcomes the problem of adapting the inventive solution to an already existing condition, and it also overcomes a further problem.

This problem is added to those mentioned above it consists in that the different manufacturers have their own internal standard that is not compatible with the one of the other manufacturers. The only standardization in common to all of them is the one about the dimensions of boxes and of fastening means for the supporting plates; but they already considerably change from one to another manufacturer.

Advantageously the invention provides also a kit for flush supports for mounting components of electric or home automation installations comprising said frame.

In said kit it is possible to provide the box and the frame in the separated or joined arrangement and the supporting plate.

Even in its version as an independent constructional part there can be different variants of the frame according to the present invention.

One embodiment particularly suitable for great manufacturing amounts provides the frame to be made by plastic material molding and or to be made of metal as one piece.

A variant embodiment more suitable in case of renovations or of very particular and dedicated arrangements provides the frame to be formed by joining linear profile elements, shaped according to what described above and cut to size and joined together such to form the frame closed on itself.

Further improvements of the invention are the subject matter of the subclaims.

These and other characteristics of the invention and the advantages deriving therefrom will be more clear from the following description of some embodiments shown in the annexed drawings wherein:
Fig. 1 is a perspective view of a rectangular flush box according to prior art.
Figure 2 is an example of the supporting plate.
Figure 3 is a plan view of a first embodiment of the frame according to the invention, in the variant as a frame composed of segments of profile elements cut to size and in the version of the frame as an element separated from the flush box.
Figures 4 and 5 are the cross sections of the frame according to sectional planes parallel to the shorter side and to the longer side respectively of the frame.
Figure 6 like figure 3 is a frame that is made as one piece by molding.
Figures 7 and 8 like figures 4 and 5 are cross sections of the frame according to two different section planes parallel to the shorter side and to the longer side respectively of the frame.
Figures 9 and 10 like figures 7 and 8 are a further variant embodiment of the invention.

With reference to the figures and to the shown embodiments, they show some variants of the possible embodiments of the invention which can be the starting point for a person skilled in the art in order to make changes to the shown specific constructional choices without for this reason exercising an inventive activity, but remaining within the general technical knowledge.

In particular figures 1 and 2 show a flush box of the type currently widely used when installing electric and/or home automation installations in buildings and a corresponding supporting plate for the electric, electronic components or the like provided in the electric, home automation installations or the like. The type of such elements is not important for the present case, since currently all the companies manufacturing components and systems for making such type of installations have made modular systems with standard dimensions of the components and of the relevant mounting systems.

As regards the box and the supporting plate, these elements of the systems for installing in-wall installations, are generally made such to satisfy some dimensional standards above all as regards box dimensions, the position of the tabs fastening the supporting plates and the relevant fastening means provided on the supporting plates.

However the existence of such standards or the existence of products that do not follow such standards do not restrict the applicability of the inventive concept covering all the present solutions and the future solutions, but the inventive concept, as already mentioned, is flexible such to be applied in different manners and adapted to different contingent needs.

The embodiment shown in the different variants is the one currently commercially preferred due to its adaptability to flush mounting systems already at least partially installed and for example where the flush boxes have been already fastened in the wall. Even in the case of the realization of new installations, the shown solutions allow the flush box already kept in stock to be used and therefore they allow investments already made in materials to be recovered.

A further advantage of the shown embodiment is the extreme flexibility according to which it is possible to apply the inventive solution to flush boxes of any type available in a specific geographical area, thus preventing the inventive technology from not being adapted to contingent conditions due to specific conventional dimensional standards of a location.

The concept of the three variant embodiments shown and described below is to provide a frame at the open side of the flush box that forms a reliable and effective structure accurately delimiting and supporting and coupling the finishing layer of a wall. This aims to make on the open side of the flush box a recess with precise and definite side delimiting walls and with such a depth with respect to the finished surface of the wall to house the supporting plate and the associated separated or integrated cover plate in a position recessed with respect to the finished surface of the wall and with the surface of said cover plate perfectly flush with the surface of the finished wall surrounding it.

Such condition of precise alignment with the finished surface of the wall has important technical aspects as regards safety, in particular as regards children that can try to access the inside of the system for curiosity. In this case, they do not have a grip for the hands to remove the cover plate as the step formed by the cover plate is missing, resulting in that accidental access attempts are more difficult if not impossible.

As mentioned above such condition leads to aesthetical effects, but also to technical/practical effects, since it avoids generating protruding edges along the walls where dust is collected and therefore it avoids also the problem of possible stains on the wall when removing dust deposits, both by accident and for the nature of the deposit.

The solution shown in three different variants is the one where the frame is a part separated from the flush box 5 and it has an interface for coupling with it and means for constraining said box and the frame itself.

In this first case it is possible for the frame to be sold separately as an independent constructional part or in a kit where at least the flush box and the corresponding frame and possibly the supporting plate are provided.

A further variant for such solution can provide the kit to comprise also a corresponding cover plate, the frame being made with dimensions proportioned to the final thicknesses of the components, of the supporting plate and of the cover plate.

A further combination as an alternative to separated supporting plates, cover plates and electric and electronic components provides them to be made as integrated, for example the components to be integrated into a constructional assembly together with cover plates or the three said elements, that is the supporting plate, cover plate and components to be provided integrated into a single constructional unit to be fitted in the frame by suitable fastening means.

Other embodiments on the contrary can provide the flush box and the frame to be made as one piece.

Also such embodiments as a single piece can be provided in a shape dedicated to specific series of supporting plates and/or cover plates and/or electric and electronic components in the installation and such three elements also in the variants according to the different levels of integration thereof into a single constructional unit described above for the embodiment that provides the frame to be unconstrained from the flush box.

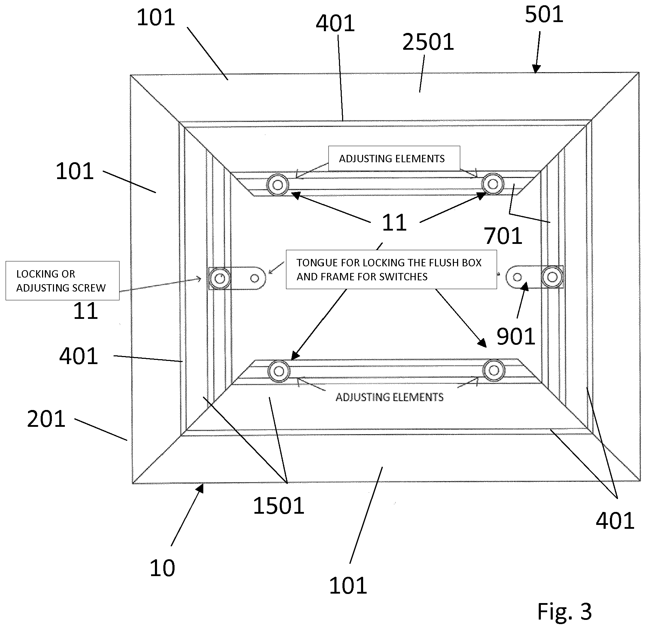

With reference to figures 3 to 5 a first variant of the embodiment providing the frame separated from the flush box and as an independent part of the system mounting the electric and electronic components of an electric or home automation installation, is about a frame composed of a series of profile pieces cut to size and joined such to form a frame completely surrounding the open side of the flush box.

The frame denoted by 10 in this case is made with a rectangular shape, but its implementation by assembling profile elements with a specific shape allows any type of geometrical shapes to be made and therefore allows the frame of the present invention to be adapted to the different contingent needs.

The shown example for simplicity reasons relates to the case of the application to a flush box 5 according to figure 1.

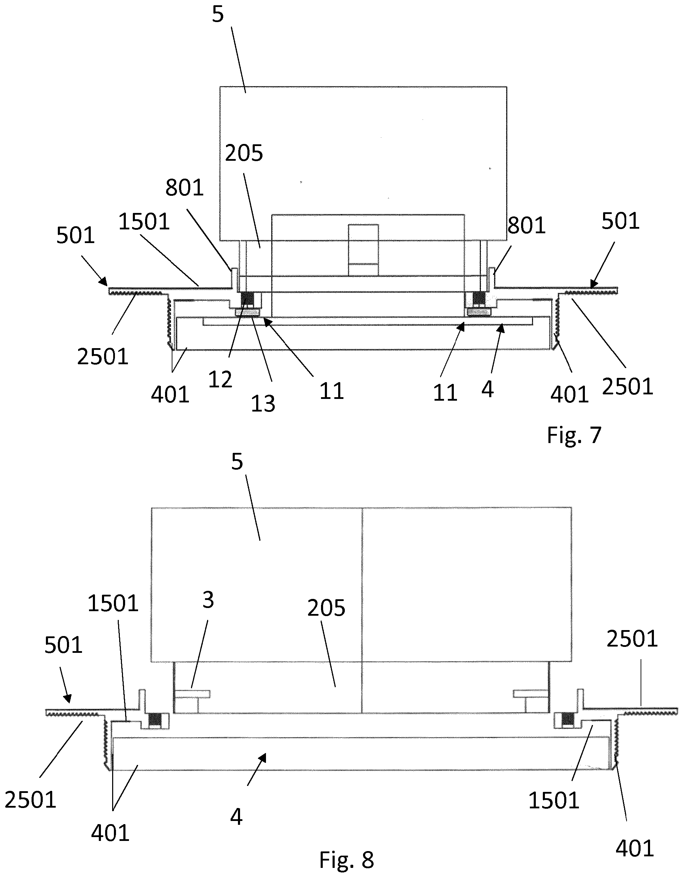

This is schematically shown in figures 3 to 10 and parts with like functions as the box shown in figure 1 will have the same identification number.

As it results from the figures the profile segments are cut to size and joined with each other. In particular in the case of the rectangular flush box 5 the profiles are cut with 45° cuts and are joined with each other. The mutual fastening means can be of different type, both by fastening keys as in window and door frames or by gluing or welding.

In the shown embodiment a particularly advantageous preferred solution has been chosen by making a groove 301 in the thickness of the outer edge 201 of the profile elements 101. At the outer end portions of the 45° cut the two grooves are accessible by a securing screw or pin that therefore is tightened or forced by pressure and that constraints the two profile elements with each other by penetrating into the two coincident grooves of the outer edge thereof.

As it further results from the figures, the profile elements are shaped such to form a seat laterally delimited by a wall formed by a tab 401 of the profile elements 101 that is oriented substantially perpendicularly to the wall and/or supporting plate (fig.2) that will be mounted later.

Said seat is intended to receive the supporting plate 4, with the electric or electronic components and with the cover plate. The tabs 401 of the segments of profile elements joined with each other are provided in such a position relative to the edge of the segments of the profile elements intended to form the outer perimetral edge of the frame 10, that they form a continuous containment and interfacing wall inwardly of said seat, for the finishing material of the wall.

The base of the tab 401 extends from a tab 501 having an inner branch 1501 and an outer branch 2501 with respect to said seat, the tab 501 and hence the two branches 1501 and 2501 being oriented perpendicularly to the tab 401. Therefore the outer branch 2501 of the tab 501 is intended to be oriented parallel to the finished surface of the wall.

The outer branch 2501 of the tab 501 and the tab 401 of each segment 101 of the profile elements therefore form a L with a side parallel to the finished surface of the wall and one side perpendicular thereto and forming the edge delimiting the finishing layer of the wall, towards the seat.

The leg of the L forming such delimiting part is the assembly of the tabs 401, the length of each one of said tabs 401, in the direction perpendicular to the branch 2501 of the tab 501, being equal to the thickness of the finishing layer of the wall, obviously minus the thickness of the tab 501 itself.

Anyway the free edge of the tabs 401 is intended to coincide with the wall finished surface.

Both the tabs 401 and 2501 have a corrugated surface on the side intended to contact the wall finishing material.

Such roughening can be obtained in several manners and with several roughness levels, also in the form of indentations of the surface.

The end of the tab 401 of each profile element is advantageously tapered with a thickness reduction from the side outside the seat 401 towards the face facing the inside of the seat composed of said tabs 401.

The outer branch 2501 of the tab 501 can have a given thickness and can be shaped such to have the groove 301 and possibly also other lightening recesses housing and anchoring masses of materials, such as glues, cements, or the like for fastening the frame to the rough masonry or the like of the wall.

The inner branch 1501 of the tab 501 extends for a given length towards the inside of the frame and with the segments 101 of the profile elements in the assembled condition it forms an abutment strip extending all along the inner perimeter of the seat for the supporting plate 4 and the other elements associated thereto.

As it results from the figures, such strip is placed recessed with respect to the free edge of the tab 401 of the respective segment 101 of the profile element by an amount substantially corresponding to the maximum thickness provided for the assembly of supporting plate, cover plate and possibly electric or electronic components mounted in the supporting plate according to the different combinations provided above.

At least at one or more points of the abutment strip on two or more of the segments of the profile elements forming the frame there are provided adjustable spacer elements denoted by 11.

Such adjustable spacer elements 11 allow the abutment surface and so the position of the outer surface of the assembly of supporting plate, cover plate and possibly electric or electronic components to be accurately adjusted with respect to the surface of the finished wall.

In the shown embodiment the adjustable spacer elements act on the supporting plate 4 but depending on the variant provided for implementing the assembly of supporting plate, electric or electronic components of the installation mounted thereon and cover plate they can act on a support surface of a unit integrating two or more of said constructional elements.

In the embodiment shown in figures 3 to 5 the spacer elements are provided in a number of four and are placed at the four corner areas of the seat delimited by the tabs 401, particularly on the segments of the profile elements parallel to the two longer sides of the flush box 5.

The spacer elements for example are in the form of non-rounded (hexagonal or square) nut screws, such as nuts, housed in a longitudinal groove 701 of the branch 1501 of the profile element 501 which groove has a width corresponding to a diameter of the non-rounded nut screws and it is partially closed on the side facing the surface of the wall by a slot with such a width to allow the threaded part of a screw or bolt to pass through. By unscrewing and screwing the bolt it is possible to change the position of the head and therefore the position of the support surface of the supporting plate, or the like in relation to the free edge of the tabs 401.

Other variants are clearly possible and fall within the choices of the person skilled in the art among solutions known and present in his/her general technical knowledge.

It has to be noted that in this case, such solution of the spacer elements 11 is provided in combination with their positioning in the branches intended to be substantially horizontal, such that it is not necessary to provide the nut screws to be fastened in the longitudinal groove 701 of the two opposite segments of profile elements.

Moreover the branch 1501 of the tab 501 of the two segments of the profile elements forming the horizontal branches, that is the ones parallel to the longer sides of the flush box 5, protrudes to a greater extent towards the inside of the frame with respect to the corresponding branch 1501 of the segments of the profile elements associated with the shorter sides of the flush box 5.

In the specific case of the example shown and intended to be provided in combination with boxes already existing on the market this is substantially due to the fact that the box 5 has the fastening tabs 3 (fig.1) for the supporting plate 4 in the median area of the shorter sides as denoted by 3 in figure 1.

Therefore the shown embodiment advantageously provides to keep the supporting plate 4 fastening to the means, that is tabs 3, already present on the box, thus preventing the latter from being covered and preventing alternative means from being provided directly on the frame, thus avoiding an increase in costs.

It is obvious that if one should operate without the need of using the flush boxes already on the market by re-defining a flush box as a single piece with a frame of the type described according to the present invention, then such characteristic could not be necessary anymore.

Anyway regardless of such specific configuration and generally speaking, the profile elements forming the frame 10 are shaped in the cross-section, such that in the assembled condition of different segments thereof to form the shown frame, they at least form along a part of the inner perimeter of said frame 10 and preferably along at least two opposite sides a coupling engagement seat for at least an end portion of the end strip of the shell wall of the box 5 delimiting the open side thereof and that in the figures is denoted by 205. Moreover the profile elements forming the segments 101 of the frame 10 are further shaped in such a manner to form, at least at a part of the perimetral edge of the open side of the box, obviously, at least in some points arranged such to define a stable abutment plane, limit stop coupling abutments.

The dimensions of the coupling engagement seat with respect to the box shell wall perimetral strip 205 can be such to generate a form fit or force fit.

Moreover between the frame 10 and the flush box 5 mutual removable fastening means can be provided which can be both means securing the two parts to each other, such as screw means or the like, and mutual snap means, such as for example engagement seats on mutual contact surfaces oriented in a direction parallel to the direction fitting the frame on the box cooperating with hooking teeth on elastic tabs also oriented parallel to the fitting direction and carrying said teeth on the faces facing said engagement seats. Even in this case all the known solutions are available for the person skilled in the art and which fall within the general technical knowledge.

In the shown example the inner branch 1510 of the tab 501 of the two longer segments has a rear tab 801 oriented parallel to the shell surface of the flush box 5. The position of each tab 801 on the opposite segments 101 of profile elements with respect to the inner edge thereof is such that their distance substantially corresponds to the dimension of the end strip 205 of the box 5 parallel to said distance. Particularly such distance can be slightly higher, equal or slightly lower than the parallel dimension of the box 5 that is of the strip 205, depending on the desired coupling type.

An inner shoulder provided at a certain distance from the free edge of the tabs 801 forms an abutment limit stop surface for the insertion of the end strip 205 of the box 5 in the seat formed by the pair of tabs 801.

In this case, such shoulder is advantageously composed of the rear side of the inner branch of the tab 1501 and more precisely by the area forming the groove mounting the spacer elements 11.

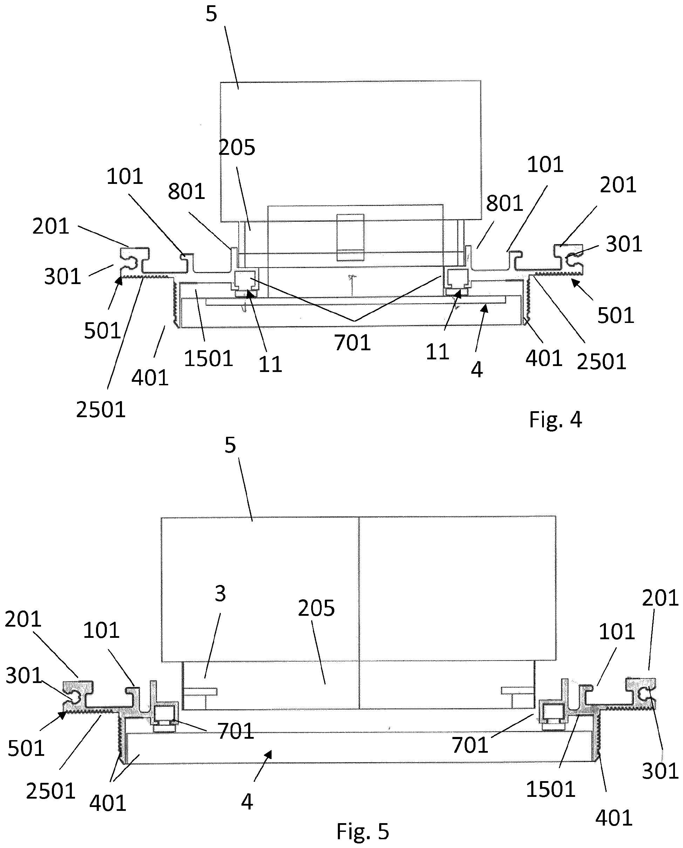

Such arrangement is clear in figure 4.

As regards the segments 101 of the profile elements parallel to the shorter sides, they have a shape like the one described with reference to the segments of the profile elements associated to the longer sides, but the inner branch 1501 of the tab 501 protrudes by a smaller amount and such that the free inner edge thereof ends at a given distance from the corresponding side of the end strip 205 of the shell surface of the box 5 in the area of the open side thereof.

In this case the inner edge of the inner branch 1501 of the tab 501 is shaped like the one of the segments of the profile elements associated to the longer sides such to form a similar housing groove also in this case denoted by the reference numeral 701.

A perforated tongue 901 is fastened by a fastening system similar to the one used for the spacer means with screw and nut screw. The perforated tongue 901 is placed in the median area of the length extension of the corresponding segment of the profile element and however in such a position to overlap the tongue 3 provided on the box 5 for fastening the supporting plate. The length of the tongue is such that a hole at the free end thereof protruding inwardly of the frame is coinciding with the engagement hole of the means fastening the supporting plate to the tongue of the box.

By means of this the fastening of the supporting plate to the box by a screw fastening results in the frame being fastened to the box structurally strengthening the assembly of the parts coupled with each other.

As already mentioned obviously this is a preferred solution. A variant may be to simply provide the profile element of the frame to be fastened to the box at other points and the supporting plate to be fastened directly to the frame and particularly on one or more points to the inner branches 1501 of the tab 501.

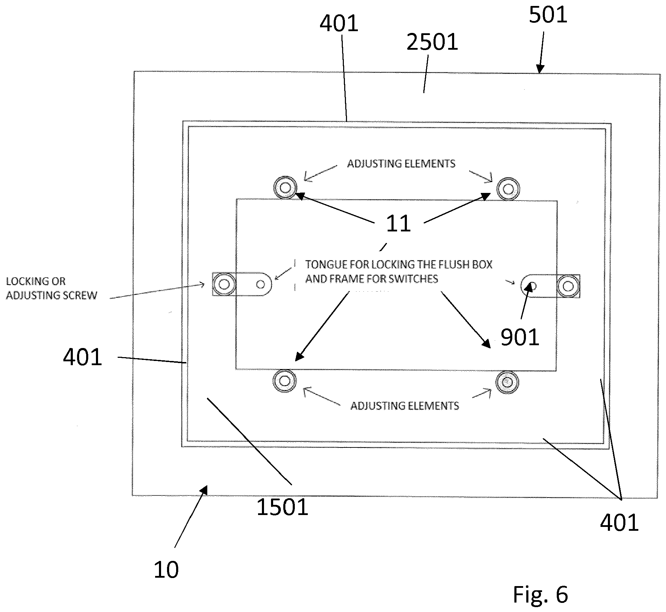

With reference to figures 6 to 8, they show like figures 3 to 5, a variant embodiment of the embodiment shown in figures 3 to 5.

Such variant still provides the frame 10 to be a constructional part separated from the flush box 5, but in this case, the frame is made as one piece by means of injection molding techniques for plastic materials or also by molding sheets or other materials.

The arrangement of the embodiment of figures 6 to 8 is substantially identical with reference to the essential parts of the inventive idea, however the construction as one piece and preferably made of plastic material simplifies the production of some parts.

Therefore for some constructional parts having the same function the same reference numerals will be used as in figures 3 to 5.

Particularly the main differences are about the realization of the inner branch 1501 of the tab 501, except for obvious constructional differences deriving from making it as one piece and by molding it allowing a simpler and lighter structure.

Said spacer means 11, as well as the means for fastening the tongues 901 are easy to be made by being embedded in the plastic material, for example by overmolding threaded seats or nut screws that are firmly embedded in the material. The nut screws denoted by 12 are intended to engage threaded pins or bolts 13, whose heads like in the previous example are the abutment surfaces that can be adjusted for the fine adjustment of the position of the supporting plate 4 and of the associated parts (cover plate and electric and electronic components) in the several combinations and integrations described.

Also in this example the inner edges of the inner branches 1501 of the tabs 501 have a given thickness intended to embed the nut screws and at the long sides they form the limit stop abutment for fitting the box 5.

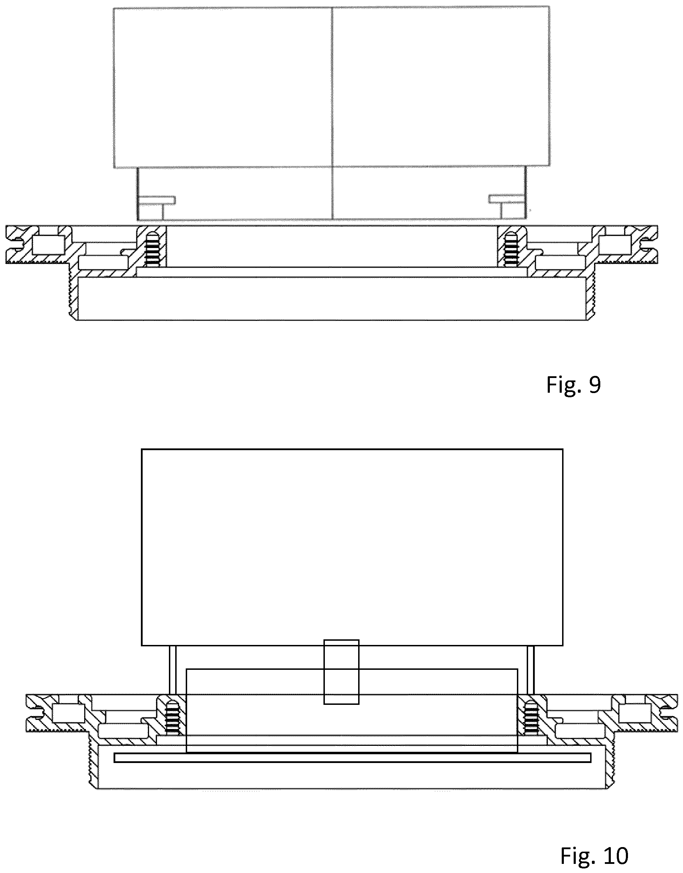

Figures 9 and 10 show a further variant of the frame 10 being as a part independent from the box 5 and intended to be coupled thereto also later, that is upon finishing the walls.

In this case a first variant is that the spacer elements are always composed of screw means as in the previous embodiments, however the threaded engagement seat is directly made in the material forming the frame, for example plastic material. Particularly such seats are in the form of holes intended to cooperate with self-tapping screws or the like.

A further variant consists in that there are no tabs 801 forming the seat for fitting the box 5 and in that the frame has a rear abutment edge 15 abutting against the whole edge of the shell wall of the box 5 delimiting the open side thereof.

Finally it has to be noted that the description has been made with reference to conventional solutions of the known systems for making installations, but as regards the fastening of the supporting plates, especially when the electric or electronic components and possibly also the cover plate are integrated in a single piece, this can be done also in different manners such as snap fastening, by magnets, or by adhesives.

As regards the relative positioning of the tabs 401 and the tab 501, particularly for the outer branch 2501 of the latter, even if the tabs are shown as placed perpendicularly to one another and even if this is the solution described in details, it is possible for said tabs 501, 401 to be oriented in a different manner with respect to being perpendicular and/or to substantially have a metal strap shape, but they can have also a two-dimensional polygonal section with different arrangements of the two opposite surfaces.

On the contrary as regards application, the inventive solutions can be applied both to walls of conventional type made of bricks or the like and plaster and to walls providing plasterboard or the like for their finishing and also to those not employing bricks or the like for the rough structure, but employing other systems, by simply obviously adjusting the described frame to the specific case of application.

It has to be noted also that if a conventional aesthetical effect is desired with the cover plate protruding from the exposed surface of the wall, because of a mere aesthetical need or for being uniform with other areas of a building for example a building under renovation where interventions have been made only in some locations and not in other ones, then the solution according to the present invention allows also such type of mounting to be obtained, by means adjusting the abutment depth of the supporting plate with respect to the frame or the shimming means.

Therefore in comparison with prior art systems, the invention allows not only new aesthetical effects to be obtained in mounting the control members of electric or home automation installations, but it allows also a traditional mounting solution to be kept very simply, therefore providing a flexibility that the known mounting systems do not have.

## Claims

1. Frame for flush boxes for mounting components of electric or home automation installations, said frame (10) being provided as the end part of a flush support (5) of the type intended to be embedded into the thickness of a wall and said frame (10) being provided all about the edge of the open front side of said flush support or composing said peripheral edge of said open side, said frame has a cross section having two tabs (401, 501, 2501) with a non-parallel orientation and which tabs are joined to each other delimiting a corner region having a specific angle size and intended to receive the finishing material of a wall,
with a first tab (501, 2501) intended to be placed parallel to the surface of the wall finishing layer and
with the other tab (401) oriented transversely to said first one and having an extension from the base joining it to said first tab (501, 2501) towards its free end, corresponding to the expected thickness of the wall finishing layer, minus the thickness of the first tab, parallel to the surface of the wall free edge of said second tab (401) coinciding with the finished surface of the wall,
and said second tab (401) of the cross-section of the frame delimits towards the inside of the frame itself a recess housing the supporting plate (4) of the operating components or a cover plate, the depth of such recess with respect to the surface of the finished wall corresponds to the thickness of said supporting plate (4) or of the said cover plate, **characterised in that** there are provided at least two or more abutment tabs for said supporting plate (4) or for the combination of at least one supporting plate with at least one cover plate, at least some of such abutment tabs (1501) having spacer elements (11) adjustable for enabling a fine adjustment of the abutment position of the supporting plate (4) or of a combination of at least one supporting plate and at least one cover plate, with respect to the frame and therefore with respect to the surface of the finished wall.

2. Frame according to claim 1 wherein said first tab (2501) has an extension at least equal to that of said second tab (401) forming the angle section of the external perimeter of the frame (10).

3. Frame according to claim 1 or 2, **characterized in that** along its inner edge it has a continuous or discontinuous border for the abutment of the supporting plate or a combination of at least one supporting plate with at least one cover plate, at least in some of them at least three preferably four adjustable spacer elements (11) being applicable which are arranged in such positions to uniquely define an abutment plane.

4. Frame according to one or more of the preceding claims, wherein the frame (10) is made as one piece with a body of flush box (5).

5. Frame according to one or more of the claims 1 to 3, **characterized in that** it is provided as an independent part and applicable to a separate flush box (5), possibly pre-existing and possibly already installed.

6. Frame according to claim 5, **characterized in that** at the rear side it has a seat for fitting the strip (205) of the shell wall of the flush box (5) that surrounds the open front side of the box (5) itself and which fitting seat has a continuous or discontinuous abutment flange (1501, 701) with which the end edge of the shell walls of the box (5) cooperates and that delimits the open side thereof and possibly a continuous or discontinuous wall (801) laterally delimiting a fitting seat intended to overlap said end strip (205) of the shell wall of the box (5) in the area of the open side thereof.

7. Frame according to claims 5 or 6, **characterized in that** there are provided means for removably coupling the frame (10) to the flush box (5), such as snap removable coupling elastic means or mutual fastening means of the screw type.

8. Frame according to one or more of the preceding claims, wherein the frame (10) is made as a single piece, possibly made of plastic material and by molding it.

9. Frame according to one or more of the preceding claims, wherein the frame (10) is made of profile elements having a predetermined shape and by cutting to size them and by assembling the segments of the profile elements in a frame closed on itself.

10. Kit for flush supports for mounting components of electric or home automation installations comprising at least one frame according to one or more of the preceding claims and possibly at least one flush box (5) in the form of an element separate or joined to the frame (10) and possibly the supporting plate (4) the kit possibly providing also one or more spacer elements in the form of shimming elements having different thicknesses and intended to be mounted for shimming the frame with respect to the wall and/or the supporting plate with respect to the frame.

11. Flush support for components of electric or home automation installations **characterized in that** it comprises a flush box (5) with an open front side delimited by a frame (10) according to one or more of the preceding claims 1 to 9.

## Patentansprüche

1. Rahmen für Unterputzdosen zur Montage von Komponenten von Elektroinstallations- oder Heimautomatisierungsanlagen, wobei der Rahmen (10) als Endteil einer Unterputz-Halterung vorgesehen (5) ist, die dazu bestimmt ist, in die Dicke einer Wand eingelassen zu werden, und der Rahmen (10) vollständig um den Rand der offenen Vorderseite der Unterputz-Halterung umlaufend vorgesehen ist oder den Umfangsrand der offenen Seite bildet, und der Rahmen einen Querschnitt mit zwei Laschen (401, 501, 2501) mit einer nicht parallelen Ausrichtung aufweist und diese Laschen aneinander anschließend einen Eckbereich begrenzen, der eine bestimmte Winkelgröße aufweist und zum Aufnehmen des Endbearbeitungsmaterials einer Wand bestimmt ist,
mit einer ersten Lasche (501, 2501), die dazu bestimmt ist, parallel zur Oberfläche der Endbearbeitungsschicht angeordnet zu werden und
mit der anderen Lasche (401), die quer zu der ersten ausgerichtet ist und eine Ausdehnung aufweist, die sich von ihrer Anschlussbasis mit der ersten Lasche (501, 2501) bis zu ihrem freien Ende erstreckt und der zu erwartenden Dicke der Endbearbeitungsschicht entspricht, abzüglich der Dicke der ersten Lasche, die parallel zur Oberfläche der Wand ist, und die freie Kante der zweiten Lasche (401) mit der Fertigfläche der Wand übereinstimmt,
und die zweite Lasche (401) des Querschnitts des Rahmens nach unten innerhalb des Rahmens selbst eine Ausnehmung begrenzt, die die Lagerplatte (4) der Bedienelemente oder einer Abdeckplatte aufnimmt,
und die Tiefe einer solchen Ausnehmung bezogen auf die Oberfläche der fertigen Wand der Dicke der Lagerplatte (4) oder der Deckplatte entspricht,
**dadurch gekennzeichnet, dass**
mindestens zwei oder mehr Anschlaglaschen für die Lagerplatte (4) oder für die Kombination von mindestens einer Lagerplatte mit mindestens einer Deckplatte vorgesehen sind und zumindest einige solcher Anschlaglaschen (1501) Distanzelemente (11) aufweisen, die einstellbar sind, um eine Feineinstellung der Anschlagposition der Lagerplatte (4) oder einer Kombination aus mindestens einer Lagerplatte und mindestens einer Deckplatte, gegenüber dem Rahmen und damit gegenüber der Oberfläche der fertigen Wand zu ermöglichen.

2. Rahmen nach Anspruch 1, wobei die erste Lasche (2501) eine Ausdehnung aufweist, die zumindest gleich der Ausdehnung der zweiten Lasche (401) ist, die den Winkelabschnitt des Außenumfangs des Rahmens (10) ausbildet.

3. Rahmen nach Anspruch 1 oder 2, **dadurch gekennzeichnet, dass** dieser entlang der Innenkante eine kontinuierliche oder diskontinuierliche Einfassung zur Anlage der Lagerplatte oder einer Kombination aus mindestens einer Lagerplatte und mindestens einer Deckplatte aufweist, wobei zumindest in einigen von diesen mindestens drei, vorzugsweise vier verstellbare Distanzelemente (11) einsetzbar sind, die in solchen Positionen angeordnet sind, um eine Anschlagebene eindeutig zu definieren.

4. Rahmen nach einem oder mehreren der vorhergehenden Ansprüche, wobei der Rahmen (10) einstückig mit einem Körper der Unterputzdose (5) ausgebildet ist.

5. Rahmen nach einem oder mehreren der vorhergehenden Ansprüche 1 bis 3, **dadurch gekennzeichnet, dass** dieser als eigenständiges Teil vorgesehen und an eine separate ggf. bereits vorhandene und ggf. bereits installierte Unterputzdose (5) ansetzbar ist.

6. Rahmen nach Anspruch 5, **dadurch gekennzeichnet, dass** dieser an der Rückseite einen Sitz zur Aufnahme des Mantelwandstreifens (205) der Unterputzdose (5) aufweist, wobei der Streifen die offene Stirnseite der Dose (5) selbst umgibt, und welcher Stecksitz einen kontinuierlichen oder diskontinuierlichen Anschlagsflansch (1501, 701) aufweist, mit dem die Stirnkante der Mantelwände der Dose (5) zusammenwirkt und dessen offene Seite und gegebenenfalls eine kontinuierliche oder diskontinuierliche Wand begrenzt (801), welche einen Stecksitz seitlich begrenzt, der dazu bestimmt ist, den Endstreifen (205) der Mantelwand der Dose (5) im Bereich seiner offenen Seite zu überlappen.

7. Rahmen nach Anspruch 5 oder 6, **dadurch gekennzeichnet, dass** Mittel zur lösbaren Verbindung des Rahmens (10) mit der Unterputzdose (5), wie lösbare elastische Schnappkupplungsmittel oder nach Art einer Schraube ausgebildete gegenseitige Befestigungsmittel vorgesehen sind.

8. Rahmen nach einem oder mehreren der vorhergehenden Ansprüche, wobei der Rahmen (10) aus einem Einzelstück gebildet ist, der gegebenenfalls aus Kunststoff und durch Formen hergestellt ist.

9. Rahmen nach einem oder mehreren der vorhergehenden Ansprüche, wobei der Rahmen (10) aus Profilelementen mit vorbestimmter Form und durch Zuschneiden und Zusammensetzen der Segmente der Profilelemente zu einem an sich geschlossenen Rahmen hergestellt ist.

10. Kit für Unterputzhalterungen zur Montage von Komponenten von Elektroinstallations- oder Heimautomatisierungsanlagen mit mindestens einem Rahmen nach einem oder mehreren der vorhergehenden Ansprüche und ggf. mindestens einer Unterputzdose (5) in Form eines separaten oder mit dem Rahmen (10) verbundenen Elements und ggf. der Lagerplatte (4), wobei im Kit gegebenenfalls auch ein oder mehrere Abstandselemente in Form von Passelementen mit unterschiedlichen Dicken vorgesehen sind, die dazu bestimmt sind, den Rahmen gegenüber der Wand und/oder die Lagerplatte gegenüber dem Rahmen mit Passabstand zu montieren.

11. Unterputzhalterung für Komponenten von Elektroinstallations- oder Heimautomatisierungsanlagen **dadurch gekennzeichnet, dass** sie eine Unterputzdose (5) mit einer offenen Vorderseite, welche durch einen Rahmen (10) nach einem oder mehreren der vorhergehenden Ansprüche 1 bis 9 begrenzt ist, umfasst.

## Revendications

1. Cadre pour boîtes à encastrer pour le montage de composants d'installations électriques ou de domotique, ledit cadre (10) étant prévu en tant que partie d'extrémité d'un support affleurant (5) du type destiné à être encastré dans l'épaisseur d'une paroi, et ledit cadre (10) étant prévu tout au long du bord du côté avant ouvert dudit support affleurant ou composant ledit bord périphérique dudit côté ouvert, ledit cadre comportant une section transversale avec deux ailettes (401, 501, 2500), avec une orientation non parallèle, lesdites ailettes étant unies les unes aux autres et délimitant ainsi une région de coin ayant une dimension d'angle spécifique et destinée à recevoir le matériau de finition d'une paroi,
une première ailette (501, 2501) étant destinée à être orientée parallèle à la surface de la couche de finition de la paroi, et
l'autre ailette (401) étant orientée transversalement à ladite première et s'étendant de la base qui l'unit à ladite première ailette (501, 2501) vers son extrémité libre, sur une longueur correspondant à l'épaisseur prévue de la couche de finition de la paroi, moins l'épaisseur de la première ailette, parallèlement à la surface du bord libre de la paroi de ladite seconde ailette (401) coïncidant avec la surface finie de la paroi,
et ladite seconde ailette (400) de la section transversale du cadre délimite, vers l'intérieur du cadre lui-même, un évidement de logement pour la plaque de support (4) des composants de fonctionnement ou pour une plaque de couverture, la profondeur dudit évidement par rapport à la surface de la paroi finie correspondant à l'épaisseur de ladite plaque de support (4) ou de ladite plaque de couverture, **caractérisé en ce qu'**au moins deux ou plusieurs ailettes de butée sont agencées pour ladite plaque de support (4) ou pour la combinaison d'au moins une plaque de support avec au moins une plaque de couverture, au moins une partie desdites ailettes de butée (1501) possédant des éléments intercalaires (11)réglables pour permettre le réglage fin de la position de butée de la plaque de support (4) ou d'une combinaison d'au moins une plaque de support et d'au moins une plaque de couverture, par rapport au cadre et donc par rapport à la surface de la paroi finie.

2. Cadre selon la revendication 1, dans lequel ladite première ailette (2501) s'étend au moins sur une même longueur que celle de ladite seconde ailette (401) formant la section de coin du périmètre extérieur du cadre (10).

3. Cadre selon la revendication 1 ou 2, **caractérisée en ce qu'**il possède un encadrement continu ou discontinu de butée, le long de son bord intérieur, pour la plaque de support ou pour une combinaison d'au moins une plaque de support avec au moins une plaque de couverture, au moins trois, de préférence quatre éléments intercalaires réglables (11) étant applicables dans au moins une partie de celles-ci, et étant agencés dans une position telle à définir un plan de butée univoque.

4. Cadre selon l'une ou plusieurs des revendications précédentes, dans lequel le cadre (10) est réalisé d'un seul tenant avec un corps de la boîte à encastrer (5).

5. Cadre selon l'une ou plusieurs des revendications 1 à 3, **caractérisé en ce qu'**il est réalisé en forme d'une partie indépendante est applicable à une boîte à encastrer séparée (5), éventuellement préexistante et éventuellement déjà installée.

6. Cadre selon la revendication 5, **caractérisé en ce qu'**il possède sur son côté arrière un logement d'embrayage de la bande (205)de la paroi de chemise de la boîte à encastrer (5) entourant le côté avant ouvert de la boîte (5) même, ledit logement d'embrayage possédant une bride de butée continue ou discontinue (1500, 701) avec laquelle coopère le bord d'extrémité des parois de chemise de la boîte (5), et qui délimite le côté ouvert de celle-ci, et éventuellement une paroi continue ou discontinue (801) qui délimite latéralement un logement d'embrayage destiné à se superposer sur ladite bande d'extrémité (205) de la paroi de chemise (5) dans la zone de son côté ouvert.

7. Cadre selon les revendications 5 6, **caractérisé en ce que** des moyens sont agencés pour l'accouplement amovible du cadre (10) à la boîte à encastrer (5), tels que des moyens élastiques d'accouplement amovible ou des moyens de fixation réciproque du type a vis.

8. Cadre selon l'une ou plusieurs des revendications précédentes, dans lequel le cadre (10) est réalisé d'un seul tenant, éventuellement en matière plastique et par moulage.

9. Cadre selon l'une ou plusieurs des revendications précédentes, dans lequel le cadre (10) est réalisé avec des éléments profilés présentant une forme prédéterminée, en les coupant sur mesure et en assemblant les éléments profilés dans un cadre fermé sur lui-même.

10. Kit pour des supports à encastrer pour le montage de composants d'installations électriques ou de domotique comportant au moins un cadre selon l'une ou plusieurs des revendications précédents et, éventuellement, au moins un boîtier encastré (5) sous forme d'un élément distinct ou uni au cadre (10) et éventuellement à la plaque de support (4), le kit comportant éventuellement également un ou plusieurs éléments intercalaires sous forme d'éléments de calage ayant des épaisseurs différentes et destinés à être montés pour caler le cadre par rapport à la paroi et/ou la plaque de support par rapport au cadre.

11. Support à encastrer pour des composants d'installations électriques ou de domotique, **caractérisé en ce qu'**il comprend une boîte encastrée (5) avec un côté avant ouvert délimité par un cadre (10) selon l'une ou plusieurs des revendications précédentes 1 à 9.
